# EUROPÄISCHE PATENTANMELDUNG

(11) **EP 4 706 931 A2**
(43) Veröffentlichungstag der Anmeldung: **11.03.2026**
(21) Anmeldenummer: 26152214.8
(22) Anmeldetag: 19.09.2022
(51) Int. Cl.: B29C 45/44

(54) **STRÖMUNGSOPTIMIERTE LEITUNGSVERBINDERANORDNUNG**

(30) Priorität: 22.09.2021 DE 102021124552
(62) Teilanmeldung aus: 22777626.7
(71) Anmelder: NORMA Germany GmbH, 63477 Maintal (DE)
(72) Erfinder: Schneider, David, 63477 Maintal (DE); Kintea, Daniel, 63477 Maintal (DE); Clasen, Hannes, 63477 Maintal (DE)
(74) Vertreter: Kusche, Robert

(57) **Zusammenfassung**

Die Erfindung betrifft einen Leitungsverbinder zum fluidkommunizierenden Verbinden von Fluidleitungen, umfassend ein Gehäuse mit einem Aufnahmeraum, einem Anschlussstutzen und einen fluiddurchströmbaren Kanal, wobei der fluiddurchströmbare Kanal einen ersten gerade Kanalabschnitt und einen gebogenen Kanalabschnitt aufweist, wobei der gebogene Kanalabschnitt direkt an den ersten geraden Kanalabschnitt fluiddurchströmbar anschließt und mit einem zweiten geraden Kanalabschnitt fluiddurchströmbar verbindbar ist. Der gebogene Kanalabschnitt weist eine innere Kanallinie und eine äußere Kanallinie auf, wobei die äußere Kanallinie weniger stark gekrümmt ist als die innere Kanallinie. Die äußere Kanallinie des gebogenen Kanalabschnitts weist insbesondere über eine gesamte Erstreckung des gebogenen Kanalabschnitts eine Länge L auf. Der gebogene Kanalabschnitt weist zumindest eine Aufweitung auf.

## Beschreibung

Die Erfindung betrifft einen Leitungsverbinder gemäß dem Oberbegriff von Anspruch 1.

Leitungsverbinder wie beispielsweise von DE 10 2016 119 659 A1 oder
DE 20 2017 006 641 U1 angegeben, werden oftmals in einem Flüssigkeitskreislauf eingesetzt, beispielsweise einem Kühlmittelkreislauf eines Kraftfahrzeugs.

Leitungsverbinder kommen dabei einerseits zum Verbinden zweier Leitungen zum Einsatz, die aus Fertigungs- oder Montagegründen erst später miteinander verbunden werden sollen. Andererseits kann es auch aus anderen Gründen technisch notwendig sein, Leitungen aufzuteilen. Weil Leitungen beispielsweise meist nicht in engen Radien verlegt werden können, werden die Leitungen an diesen engen Radien zweigeteilt ausgeführt, und mit einem abgewinkelten Leitungsverbinder verbunden. Gemäß DE 20 2017 006 641 U1 wird der Richtungswechsel mit dem Leitungsverbinder scharfkantig in verschiedenen Winkeln, insbesondere im rechten Winkel vollzogen. Nachteilhaft hierbei sind Druckverluste durch Verwirbelungen.

Geringere Verwirbelungen und damit geringere Druckverluste treten bei der Ausführung nach DE 10 2016 119 659 A1 auf. Hier weist der Leitungsverbinder für den Richtungswechsel eine Kanalkrümmung auf. Die Kanalkrümmung erfolgt durch einen gebogenen Kanalabschnitt, der zwischen einer inneren Kanallinie und einer äußeren Kanallinie ausgebildet ist. Dabei ist die äußere Kanallinie weniger stark gekrümmt als die innere Kanallinie.

Nachteilhaft ist auch hier, dass in Strömungsrichtung hinter der Biegung beziehungsweise dem scharfen Knick in der inneren Kanallinie eine als Totwasserzone bezeichenbare Verwirbelung resultiert. Der Begriff Totwasserzone ist hierbei unabhängig vom tatsächlichen Fluid und ist nicht auf Anwendungen mit Wasser beschränkt. Der wesentliche Fluidstrom führt um diese Totwasserzone herum entlang der äußeren Kanallinie. Aufgrund des um die Totwasserzone reduzierten fluiddurchströmbaren Leitungsquerschnitts ist die Strömungsgeschwindigkeit im Bereich der äußeren Kanallinie deutlich höher als beispielsweise stromaufwärts. Erst ein ganzes Stück stromabwärts hinter der Biegung des gebogenen Kanalabschnitts beruhigt sich die Strömung wieder und nähert sich erneut einem Strömungsprofil an, das einer Normalverteilung in einem linearen Rohr entspricht. Bei solch einer Normalverteilung ist die Geschwindigkeit direkt angrenzend an der Rohrwandung null und steigt dann mit zunehmendem Abstand von der Rohrwandung an.

Aufgrund der Druckverluste sind erhöhte Aufwände, beispielsweise durch größere Pumpen, zu betreiben, um den notwendigen Fluidstrom gewährleisten zu können.

Derartige Aufwände gehen somit insbesondere zu Lasten des Gewichts und des Energieverbrauches, welches wiederrum beispielweise die Reichweite von Fahrzeugen vermindert.

Aufgabe der Erfindung ist es deshalb, einen Leitungsverbinder und eine Leitungsverbinderanordnung mit Richtungsänderung bereitzustellen, bei der die entstehenden Druckverluste minimiert oder zumindest reduziert sind. Die Lösung soll möglichst kostengünstig, zuverlässig und platzsparend sowie einfach herzustellen sein.

Hauptmerkmale der Erfindung sind im kennzeichnenden Teil von Anspruch 1 angegeben. Ausgestaltungen sind Gegenstand der Ansprüche 2 bis 7 sowie der Beschreibung.

Die Erfindung betrifft einen Leitungsverbinder zum fluidkommunizierenden Verbinden von Fluidleitungen, umfassend ein Gehäuse mit einem Aufnahmeraum, einem Anschlussstutzen und einen fluiddurchströmbaren Kanal, wobei der fluiddurchströmbare Kanal einen ersten gerade Kanalabschnitt, einen zweiten gerade Kanalabschnitt und einen gebogenen Kanalabschnitt aufweist, wobei der gebogene Kanalabschnitt zwischen dem ersten und zweiten geraden Kanalabschnitt angeordnet ist und diese miteinander fluiddurchströmbar verbindet, wobei der gebogene Kanalabschnitt eine innere Kanallinie und eine äußere Kanallinie aufweist, wobei die äußere Kanallinie weniger stark gekrümmt ist als die innere Kanallinie. Die äußere Kanallinie des gebogenen Kanalabschnitts weist über eine gesamte Erstreckung des gebogenen Kanalabschnitts eine Länge L auf, wobei gilt: 0,9*α*d ≤ L ≤ 1,1*α*d. Insbesondere ist L ≥ 0,925*α*d. α ist hierbei im Bogenmaß angegeben.

Der Begriff "gekrümmt" kann hier synonym zu dem Begriff "gebogen" verwendet werden.

Die äußere Kanallinie kann dabei eine konstante, alternativ aber auch unterschiedliche oder sich verändernde Krümmungen aufweisen. Gegenüber herkömmlichen

Leitungsverbinderanordnungen ergibt sich dabei eine äußere Kanallinie, die zu geringen Druckverlusten führt.

In dem Aufnahmeraum kann ein Leitungsabschnitt einer Leitung angeordnet sein, wobei der Aufnahmeraum sich um den zweiten geraden Kanalabschnitt erstrecken kann. Der zweite gerade Kanalabschnitt kann dann in der eingesteckten Leitung angeordnet sein. Im Folgenden genannte Durchmesser beziehen sich auf die fluiddurchströmbaren Kanalabschnitte, die auch durch einen Leitungsabschnitt einer Leitung innerhalb des Leitungsverbinders gebildet sein können.

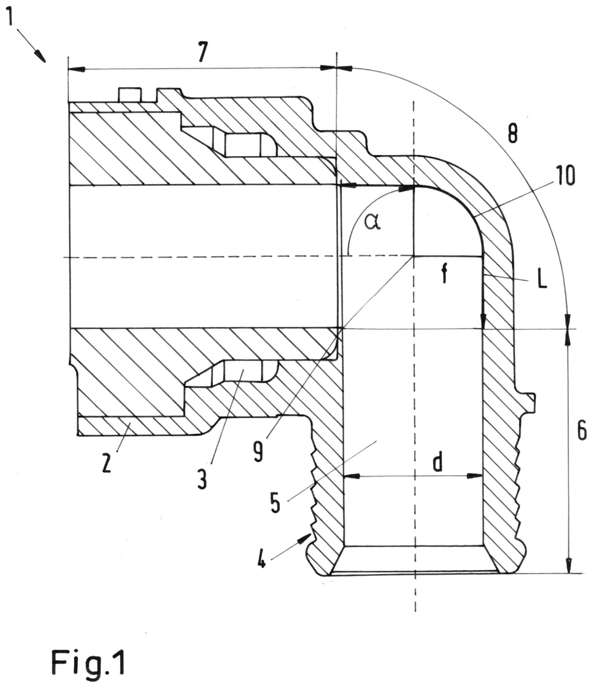

Der Radius der Biegung der äußeren Kanallinie kleiner, gleich oder größer als der Durchmesser des ersten oder zweiten Kanalabschnitts, wobei er insbesondere zwischen 0,50 und 1,5-mal dem Durchmesser entspricht, bevorzugt 1-mal dem Durchmesser. Durch einen derartig großen Radius und eine damit verbundene Weitung der Biegung im Bereich des gebogenen Kanalabschnitts kann der Druckverlust durch den Richtungswechsel um ca. 20 % gegenüber einem Leitungsverbinder mit einem kleineren Kreisumfang, wie dieser beispielweise in Fig. 1 gezeigt ist, reduziert werden.

Vorteilhaft ist zudem, dass bisherige Leitungsverbinder eins zu eins ausgetauscht werden können, weil keine Änderung des Leitungsverbinders an sich, bis auf den gebogenen Kanalabschnitt, erfolgt. Insbesondere ändern sich die Anschlussmaße bzw. die Achsabstände nicht. Somit ist der Leitungsverbinder auch in eng begrenzten Räumen einsetzbar.

Sofern hier der Begriff Verbinder benutzt wird, ist dies gleichgestellt zu einem Leitungsverbinder. Wenn der erste und der zweite Kanalabschnitt unterschiedliche Durchmesser aufweisen, kann der größere Durchmesser als Bemessungsmaßstab genommen werden, wenn z. B. der Unterschied zwischen den Radien groß ist, z. B. von 16 mm auf 12 mm. Vorzugsweise wird der kleinere Durchmesser als Bemessungsmaßstab genommen, wenn der Unterschied zwischen den Radien klein ist, z. B. von 16 mm auf 15 mm.

Alternativ weist der Bemessungsmaßstab erfindungsgemäß einen stetigen Übergang zwischen den Durchmessern der Kanalabschnitte auf. Der Bemessungsmaßstab kann dann der Mittelwert der beiden Durchmesser sein. Die äußere Kanallinie des gebogenen Kanalabschnitts kann dann über die gesamte Erstreckung des gebogenen Kanalabschnitts die Länge L mit folgender Bedingung aufweisen: 0,9*α*D1 ≤ L ≤ 1,1*α*D2, wobei der Bemessungsmaßstab von dem kleineren Durchmesser D1 der beiden geraden Kanalabschnitte zum größeren Durchmesser D2 der beiden geraden Kanalabschnitte stetig übergeht. Die äußere Kanallinie kann dabei z. B. als Spline ausgebildet sein, wobei die beiden geraden Kanalabschnitte unterschiedliche Innendurchmesser aufweisen. Dann entspricht die Krümmung der äußeren Kanallinie im gebogenen Kanalabschnitt in den unmittelbar an die geraden Kanalabschnitte angrenzenden Bereichen einem Radius, welcher dem Innendurchmesser des jeweils angrenzenden Kanalabschnittes entspricht.

Die Krümmung der äußeren Kanallinie zwischen den unmittelbar an die geraden Abschnitte angrenzenden Bereiche verändert sich entlang der Kanallinie. Die Änderung der Krümmung erfolgt vorzugsweise gleichmäßig verteilt, wobei die erste Ableitung der Krümmung entlang des Bogens konstant ist, über der gesamten Kanallinie. Damit wird ein gleichmäßiger Übergang zwischen den Innendurchmessern der beiden geraden Kanalabschnitte ausgebildet.

Diese Ausführungsform ist vorteilhaft, da stetige/sanfte/gleichmäßige Änderungen des Strömungskanalquerschnitts einen geringeren Druckverlust als abrupte Übergänge, z. B. Stufen, verursachen.

Die innere Kanallinie und die äußere Kanallinie befinden sich auf entgegengesetzten Seiten des Kanalquerschnitts des gebogenen Kanalabschnitts und verlaufen parallel zur Strömungsrichtung eines den Kanal durchströmenden Fluides. Die innere Kanallinie beschreibt dabei den Bereich des gebogenen Kanalabschnitts, der am stärksten gekrümmt, beziehungsweise abgewinkelt ist. Die äußere Kanallinie beschreibt einen Bereich des gebogenen Kanalabschnitts, der am wenigsten stark gekrümmt ist, dabei aber insbesondere noch eine Biegung aufweist, welche sich von einem Ende des gebogenen Kanalabschnitts zum anderen Ende des gebogenen Kanalabschnitts erstreckt.

Die äußere Kanallinie entspricht beispielsweise einem Abschnitt eines Kreisumfangs. Der Mittelpunkt des Kreises wird dabei vorzugsweise von der inneren Kanallinie gebildet, welche insbesondere punktförmig ausgebildet ist. Dies bedeutet, dass der gebogene Kanalabschnitt im Bereich der inneren Kanallinie maximal gekrümmt ist und insbesondere abknickt. Anders ausgedrückt ist der gebogene Kanalabschnitt an der inneren Kanallinie winkelförmig und wird insbesondere durch die beiden aufeinandertreffenden geraden Kanalabschnitte geformt.

Der gebogene Kanalabschnitt weist insbesondere die Form eines Kreisabschnitts auf, wobei der Radius des Kreises, welcher dem Kreisabschnitt zugrunde liegt, vorzugsweise gleich dem Durchmesser des ersten und/oder zweiten geraden Kanalabschnitts entspricht.

Der Kreisabschnitt entspricht vorzugsweise 1/8 bis ½ eines entsprechenden Kreises mit einem Radius, welcher gleich dem Durchmesser des ersten und/oder zweiten geraden Kanalabschnitts entspricht.

Bei einem tangentialen Übergang des gebogenen Kanalabschnitts zu dem ersten und dem zweiten geraden Kanalabschnitt ergibt sich die Länge L beispielsweise aus L = αf + 2(d-f). Dabei bezeichnet α ein zwischen dem ersten und dem zweiten geraden Kanalabschnitt ausgebildeter Umlenkwinkel, f ein Radius der Biegung des gebogenen Kanalabschnitts und d ein Durchmesser der fluiddurchströmbaren Kanals.

Besonders bevorzugt entspricht die äußere Kanallinie einem Abschnitt eines Kreisumfangs, der 1/2 π multipliziert mit dem Durchmesser des ersten oder zweiten geraden Kanalabschnitts ist. Bei einem dementsprechenden Umlenkwinkel α von 90° bzw. π/2 bei einem Radius f = d ergibt sich somit eine Länge L von 1,571*d.

Vorzugsweise führt die Biegung des gebogenen Kanalabschnitts zu einer Richtungsänderung, der durch den Kanal fließenden Fluidströmung, 0,1° bis 120° vorzugsweise um 45° bis 120°, bevorzugt um 60° bis 110°, weiter bevorzugt 70° bis 95°, besonders bevorzugt um 90°.

Vorzugsweise weist der gebogene Kanalabschnitt eine Querschnittsfläche auf, die einer Querschnittsfläche des ersten und/oder zweiten Kanalabschnitts entspricht.

Vorzugsweise weisen der erste und zweite gerade Kanalabschnitt einen kreisförmigen Querschnitt auf. Vorzugsweise kann der gebogene Kanalabschnitt im Querschnitt ebenfalls einen im Wesentlichen kreisförmigen, eierförmigen oder ovalen Querschnitt aufweisen.

Vorzugsweise weist die äußere Kanallinie über die gesamte Erstreckung des gebogenen Kanalabschnitts in Strömungsrichtung einen einheitlichen Radius auf.

**In** einer bevorzugten Ausführungsform ist vorgesehen, dass der erste oder zweite gerade Kanalabschnitt durch einen im Aufnahmeraum aufgenommenen Leitungsabschnitt einer Fluidleitung ausgebildet ist.

Der im Aufnahmeraum aufgenommene Leitungsabschnitt ist insbesondere ein Zapfen.

Vorzugsweise ist der gebogene Kanalabschnitt mit dem ersten geraden Kanalabschnitt stoffschlüssig verbunden, welches insbesondere auch eine einstückige Herstellung der Kanalabschnitte umfasst. Der zweite Kanalabschnitt, welcher insbesondere durch einen im Leitungsverbinder aufgenommenen Leitungsabschnitt ausgebildet wird, ist vorzugsweise fluiddicht und lösbar mit dem gebogenen Kanalabschnitt verbunden, wobei die verbundenen Enden des zweiten geraden Kanalabschnitts und des gebogenen Kanalabschnitts insbesondere senkrecht zur Strömungsrichtung des Fluides im zweiten geraden Kanalabschnitt ausgebildet sind.

Erfindungsgemäß ist vorgesehen, dass der gebogene Kanalabschnitt zumindest eine Aufweitung aufweist.

Die Herstellung eines erfindungsgemäßen Leitungsverbinders erfolgt vorzugsweise im Spritzgussverfahren mit zwei Kernen, die den fluiddurchströmbaren Kanal formen und insbesondere im 90 ° Winkel zueinander positioniert werden. Problematisch hierbei ist allerdings, dass bei Vergrößerung des gekrümmten Bereichs des gebogenen Kanalabschnitts Hinterschneidungen im Formwerkzeug notwendig werden, welche die Herstellung aufwendig und teuer gestalten.

Durch Anpassung des gebogenen Kanalabschnitts, beispielweise durch Aufweitungen, können entsprechende Hinterschneidungen am Herstellungswerkzeug vermieden oder ausgeglichen werden.

Hinterschneidungen können beispielweise vermieden werden, indem im Bereich der inneren Kanallinie Abflachungen, insbesondere in Umfangsrichtung des gebogenen Kanalabschnitts beidseitig zur inneren Kanallinie und von dieser beabstandet, aber insbesondere in Umfangsrichtung näher an der inneren Kanallinie als an der äußeren Kanallinie, angeordnet sind. Im Querschnitt weist der gebogene Kanalabschnitt ohne Aufweitungen oder Abflachungen einen im Wesentlichen kreisförmigen Querschnitt auf. Die Abflachungen flachen die Biegung des kreisförmigen Umfangs des gebogenen Kanalabschnitts im Querschnitt ab. Hierdurch werden Hinterschneidungen am Werkzeug bei der Herstellung eines entsprechenden Leitungsverbinders vermieden.

Allerdings wird durch die insbesondere zwei Abflachungen der Strömungsquerschnitt im Bereich der Abflachungen reduziert. Ein konstanter Strömungsquerschnitt ist vorteilhaft, um den Druckverlust so gering wie möglich zu halten. Deshalb ist es bevorzugt zusätzlich zumindest eine Aufweitung vorzusehen, welche insbesondere die durch die Abflachungen reduzierte Querschnittsfläche des gebogenen Kanalabschnitts ausgleicht.

**In** einer bevorzugten Ausführungsform ist vorgesehen, dass der gebogene Kanalabschnitt insbesondere zwei Aufweitungen aufweist, die insbesondere in Umfangsrichtung des gebogenen Kanalabschnitts beidseitig und beabstandet von der äußeren Kanallinie angeordnet sind.

Vorzugsweise sind die zwei Ausweitungen, in Umgangsrichtung und somit im Querschnitt des gebogenen Kanalabschnitts betrachtet, näher an der äußeren Kanallinie als an der inneren Kanallinie angeordnet. Die Aufweitungen weiten den kreisförmigen Umfang des gebogenen Kanalabschnitts im Querschnitt, insbesondere im Vergleich zu einem gleichmäßigen kreisförmigen Querschnitt, auf.

Hierdurch wird ein vergrößerter Strömungsquerschnitt erhalten, der sich vorteilhaft auf eine gleichmäßige Strömung auswirkt.

Sowohl die Abflachung(en) als auch die Aufweitung(en) führen zu Abweichungen von einem kreisförmigen Querschnitt des gebogenen Kanalabschnitts.

Vorzugsweise entspricht die durch einen oder mehreren Abflachungen im Querschnitt des gebogenen Kanalabschnitts reduzierte Fläche gleich der zusätzlichen Fläche im Querschnitt des gebogenen Kanalabschnitts durch die einen oder mehreren Aufweitungen. Hierdurch kann gewährleitet werden, dass der Strömungsquerschnitt konstant bleibt. Dies ist vorteilhaft, um den Druckverlust zu vermindern.

Durch den Leitungsverbinder kann ein konstanter Strömungsquerschnitt der Biegung gewährleistet werden, ohne dass aufwendige Werkzeuge zur Herstellung benötigt werden.

Zudem führt ein Leitungsverbinder mit Abflachungen, insbesondere zur Vermeidung von Hinterschneidungen, und Aufweitungen, zum Ausgleich des Strömungsquerschnitts, bei einem entsprechend gebogenen Verlauf der äußeren Kanallinie des gebogenen Kanalabschnitts zu einer Reduktion des Druckverlustes um etwa 24 % gegenüber einem Leitungsverbinder gemäß Fig. 1.

In einer weiteren Ausführungsform kann eine Verbindungslinie zwischen der inneren Kanallinie und einer Innenkante eines in den Aufnahmeraum eingeführten Leitungsabschnitts, an der der zweite gerade Kanalabschnitt beginnt, einen Winkel von 30° bis 90°, vorzugsweise 40° bis 80°, weiter vorzugsweise 45° bis 60°, mit einer Erstreckungsrichtung des zweiten geraden Kanalabschnitts einschließen.

In einem Längsschnitt eines Leitungsverbinders entlang der Strömungsrichtung, ist die Verbindungslinie an entsprechender Position mittig angeordnet. Der Längsschnitt kann dabei derart gewählt werden, dass der erste Kanalabschnitt sich in einem 90° Winkel von dem Längsschnitt erstreckt.

Vorzugsweise weist die äußere Kanallinie des gebogenen Kanalabschnitts über eine gesamte Erstreckung des gebogenen Kanalabschnitts in Strömungsrichtung eine Biegung auf, wobei die äußere Kanallinie einem Abschnitt eines Kreisumfanges entspricht, der ein 1/8 π bis 2/3 π-faches eines Durchmessers des ersten und/oder zweiten geraden Kanalabschnitts entspricht.

Die innere und äußere Kanallinie erstrecken sich im Wesentlichen parallel zur Strömungsrichtung innerhalb des gebogenen Kanalabschnitts, wobei potentiell auftretende Verwirbelungen bei der Strömungsrichtung außer Betracht gelassen werden. Die äußere Kanallinie entspricht dem äußersten Bereich des Kanals, senkrecht zur Längserstreckung, des gebogenen Kanalabschnitts, der insbesondere zur Durchführung der Richtungsänderung des strömenden Fluides gebogen ist.

Vorzugsweise beschreibt die Biegung des Kreisabschnitts und somit auch die äußere Kanallinie, einen konstanten Kreisbogen, welcher äquivalent zum Umfang eines Kreisabschnittes ist, der abhängig von einem Radius ist, der gleich dem Durchmesser des ersten geraden Kanalabschnitts entspricht.

Die innere Kanallinie ist diejenige Erstreckung des gebogenen Kanalabschnitts, die die stärkste Biegung in Strömungsrichtung aufweist. Weist der gebogene Kanalabschnitt beispielweise einen Knick auf, der im Wesentlich winkelig ist, ist die innere Kanallinie im Wesentlichen punktförmig ausgebildet.

In einer bevorzugten Ausführungsform ist vorgesehen, dass die äußere Kanallinie des gebogenen Kanalabschnitts einem Kreisumfangsabschnitt entspricht, der im Wesentlichen ½ π multipliziert mit dem Durchmesser des ersten geraden Kanalabschnitts ist.

Dabei kann der gebogene Kanalabschnitt im Wesentlichen einem Viertelkreis entsprechen, wobei der Kreismittelpunkt durch die innere Kanallinie gebildet wird, von der aus insbesondere ein Kreis mit einem Radius geformt ist, welcher gleich dem Durchmesser des ersten geraden Kanalabschnitts ist. Die innere Kanallinie ist dabei vorzugsweise punktförmig. Dies bedeutet, dass der gebogene Kanal einen Knick aufweist, der insbesondere im Querschnitt des gebogenen Kanalabschnitts entgegengesetzt zur äußeren Kanallinie angeordnet ist.

Ein Leitungsverbinder mit einem gebogenen Kanalabschnitt, wobei die äußere Kanallinie einem Kreisumfangsabschnitt von ½ π des Durchmessers des ersten geraden Kanalabschnitts entspricht, ermöglicht eine Richtungsänderung des durchströmenden Fluides um 90°.

Erfindungsgemäß ist vorgesehen, dass der gebogene Kanalabschnitt zumindest eine Aufweitung aufweist.

Die Herstellung eines erfindungsgemäßen Leitungsverbinders erfolgt vorzugsweise im Spritzgussverfahren mit zwei Kernen, die den fluiddurchströmbaren Kanal formen und insbesondere im 90 ° Winkel zueinander positioniert werden. Problematisch hierbei ist allerdings, dass bei Vergrößerung des gekrümmten Bereichs des gebogenen Kanalabschnitts Hinterschneidungen im Formwerkzeug notwendig werden, welche die Herstellung aufwendig und teuer gestalten.

Durch Anpassung des gebogenen Kanalabschnitts, beispielweise durch Aufweitungen, können entsprechende Hinterschneidungen am Herstellungswerkzeug vermieden oder ausgeglichen werden.

Hinterschneidungen können beispielweise vermieden werden, indem im Bereich der inneren Kanallinie Abflachungen, insbesondere in Umfangsrichtung des gebogenen Kanalabschnitts beidseitig zur inneren Kanallinie und von dieser beabstandet, aber insbesondere in Umfangsrichtung näher an der inneren Kanallinie als an der äußeren Kanallinie, angeordnet sind. Im Querschnitt weist der gebogene Kanalabschnitt ohne Aufweitungen oder Abflachungen einen im Wesentlichen kreisförmigen Querschnitt auf. Die Abflachungen flachen die Biegung des kreisförmigen Umfangs des gebogenen Kanalabschnitts im Querschnitt ab. Hierdurch werden Hinterschneidungen am Werkzeug bei der Herstellung eines entsprechenden Leitungsverbinders vermieden.

Allerdings wird durch die insbesondere zwei Abflachungen der Strömungsquerschnitt im Bereich der Abflachungen reduziert. Ein konstanter Strömungsquerschnitt ist vorteilhaft, um den Druckverlust so gering wie möglich zu halten. Deshalb ist es bevorzugt zusätzlich zumindest eine Aufweitung vorzusehen, welche insbesondere die durch die Abflachungen reduzierte Querschnittsfläche des gebogenen Kanalabschnitts ausgleicht.

In einer bevorzugten Ausführungsform ist vorgesehen, dass der gebogene Kanalabschnitt eine, insbesondere zwei Aufweitungen aufweist, die insbesondere in Umfangsrichtung des gebogenen Kanalabschnitts beidseitig und beabstandet von der äußeren Kanallinie angeordnet sind.

Vorzugsweise sind die zwei Ausweitungen, in Umgangsrichtung und somit im Querschnitt des gebogenen Kanalabschnitts betrachtet, näher an der äußeren Kanallinie als an der inneren Kanallinie angeordnet. Die Aufweitungen weiten den kreisförmigen Umfang des gebogenen Kanalabschnitts im Querschnitt, insbesondere im Vergleich zu einem gleichmäßigen kreisförmigen Querschnitt, auf.

Hierdurch wird ein vergrößerter Strömungsquerschnitt erhalten, der sich vorteilhaft auf eine gleichmäßige Strömung auswirkt.

Sowohl die Abflachung(en) als auch die Aufweitung(en) führen zu Abweichungen von einem kreisförmigen Querschnitt des gebogenen Kanalabschnitts.

Vorzugsweise entspricht die durch einen oder mehreren Abflachungen im Querschnitt des gebogenen Kanalabschnitts reduzierte Fläche gleich der zusätzlichen Fläche im Querschnitt des gebogenen Kanalabschnitts durch die einen oder mehreren Aufweitungen. Hierdurch kann gewährleitet werden, dass der Strömungsquerschnitt konstant bleibt. Dies ist vorteilhaft, um den Druckverlust zu vermindern.

Durch den Leitungsverbinder kann ein konstanter Strömungsquerschnitt der Biegung gewährleistet werden, ohne dass aufwendige Werkzeuge zur Herstellung benötigt werden.

Zudem führt ein Leitungsverbinder mit Abflachungen, insbesondere zur Vermeidung von Hinterschneidungen, und Aufweitungen, zum Ausgleich des Strömungsquerschnitts, bei einem entsprechend gebogenen Verlauf der äußeren Kanallinie des gebogenen Kanalabschnitts zu einer Reduktion des Druckverlustes um etwa 24 % gegenüber einem Leitungsverbinder gemäß Fig. 1.

In einer bevorzugten Ausführungsform ist vorgesehen, dass innerhalb des gebogenen Kanalabschnitts zumindest ein Führungselement angeordnet ist, welches die Strömungsrichtung zumindest eines Teils eines durchströmenden Fluides verändert.

Ein derartiges Führungselement ist bereits in der Offenlegungsschrift der WO 2020/161190 A1 beschrieben, auf welches hiermit Bezug genommen wird.

Das Führungselement ist vorzugsweise bogenförmig ausgebildet, insbesondere derart, dass die Biegung des Führungselementes an die durch die Biegung des gebogenen Kanalabschnitts vorgenommene Richtungsänderung der Strömung angepasst ist und diese unterstützt.

In einer bevorzugten Ausführungsform ist vorgesehen, dass innerhalb des gebogenen Kanalabschnitts drei Führungselemente parallel zueinander und beabstandet voneinander angeordnet sind. Unter parallelen Führungselementen wird an dieser Stelle verstanden, dass lediglich einzelne quer zur Durchflussrichtung angeordnete Kanten der Führungselemente parallel zueinander sind.

Anders ausgedrückt sind die drei Führungselemente mit Abstand zueinander gestapelt, wobei der gebildete Stapel von der inneren Kanallinie zur äußeren Kanallinie erstreckt ist.

Die Führungselemente können eine Reduktion des Druckverlustes um bis zu 62 % gegenüber einem Leitungsverbinder gemäß Fig. 1 bewirken.

Die beschriebenen Merkmale des Leitungsverbinders gelten ebenfalls in Bezug auf den Leitungsverbinder der Leitungsverbinderanordnung und umgekehrt.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Leitungsverbinder gemäß Stand der Technik,
- Fig. 2a: eine erste Ausführungsform eines nun erfindungsgemäßen Leitungsverbinders,
- Fig. 2b: Form eines Kanals mit Hinterschnitt,
- Fig. 2c: Querschnitt des Kanals aus Fig. 2b
- Fig. 3a: Form des Kanals der in Fig. 2a gezeigten Ausführungsform,
- Fig. 3b: Querschnitt der in Fig. 2a gezeigten Ausführungsform,
- Fig. 4a: eine zweite Ausführungsform eines nicht unter die Ansprüche fallenden Leitungsverbinders,
- Fig. 4b: Form des Kanals der Ausführungsform in Fig. 4a,
- Fig. 4c: Querschnitt des Kanals aus Fig. 4b,
- Fig. 4d: eine Ansicht in den zweiten geraden Kanalabschnitt,
- Fig. 4e: eine dreidimensionale Schnittansicht des Leitungsverbinders aus Fig. 4a
- Fig. 5: eine dritte Ausführungsform des erfindungsgemäßen Leitungsverbinders mit Führungselementen,
- Fig. 6a: eine Längsschnittansicht einer vierten Ausführungsform des erfindungsgemäßen Leitungsverbinders,
- Fig. 6b: eine Ansicht in den zweiten geraden Kanalabschnitt mit eingeführtem Leitungsabschnitt,
- Fig. 7: eine fünfte Ausführungsform des erfindungsgemäßen Leitungsverbinders, und
- Fig. 8: eine sechste Ausführungsform des erfindungsgemäßen Leitungsverbinders.

Fig. 1 zeigt eine Schnittansicht eines Leitungsverbinder 1 beziehungsweise einer Leitungsverbinderanordnung, wie diese aktuell standardmäßig zum fluidkommunizierenden Verbinden von Fluidleitungen eingesetzt wird. Der Leitungsverbinder 1 umfasst ein Gehäuse 2 mit einem Aufnahmeraum 3, einem Anschlussstutzen 4 und einen fluiddurchströmbaren Kanal 5. Der Kanal 5 wird gebildet aus einem ersten geraden Kanalabschnitt 6, einem zweiten geraden Kanalabschnitt 7 und einem gebogenen Kanalabschnitt 8. Der gebogene Kanalabschnitt 8 ist zwischen dem ersten und zweiten geraden Kanalabschnitt 6, 7 angeordnet und verbindet diese direkt fluiddurchströmbar miteinander. Der gebogene Kanalabschnitt weist eine innere Kanallinie 9 und eine äußere Kanallinie 10 auf. Die innere Kanallinie 9 ist im Wesentlichen punktförmig ausgebildet, welches bedeutet, dass der gebogene Kanalabschnitt 8 in diesem Bereich scharf abknickt. Die äußere Kanallinie 10 beschreibt die Biegung des gebogenen Kanalabschnitts, wodurch hier eine Richtungsänderung eines durchströmenden Fluides um 90 ° umgelenkt wird. Die äußere Kanallinie 10 weist zwischen zwei geraden Bereichen eine Biegung auf, welche einem Abschnitt eines Kreisumfangs entspricht, der einem Viertelkreis mit einem Radius, welcher gleich die Hälfte des Durchmessers eines der geraden Kanalabschnitte 6, 7 ist, entspricht. Somit ist die äußere Kanallinie 10 nur teilweise gekrümmt und folgt einem Abschnitt eines Kreisumfangs, der 1/4 π multipliziert mit dem Durchmesser des ersten und/oder zweiten geraden Kanalabschnitts 6, 7 entspricht.

Der zweite gerade Kanalabschnitt 7 wird hier durch einen in den Aufnahmeraum 3 angeordneten Zapfen gebildet.

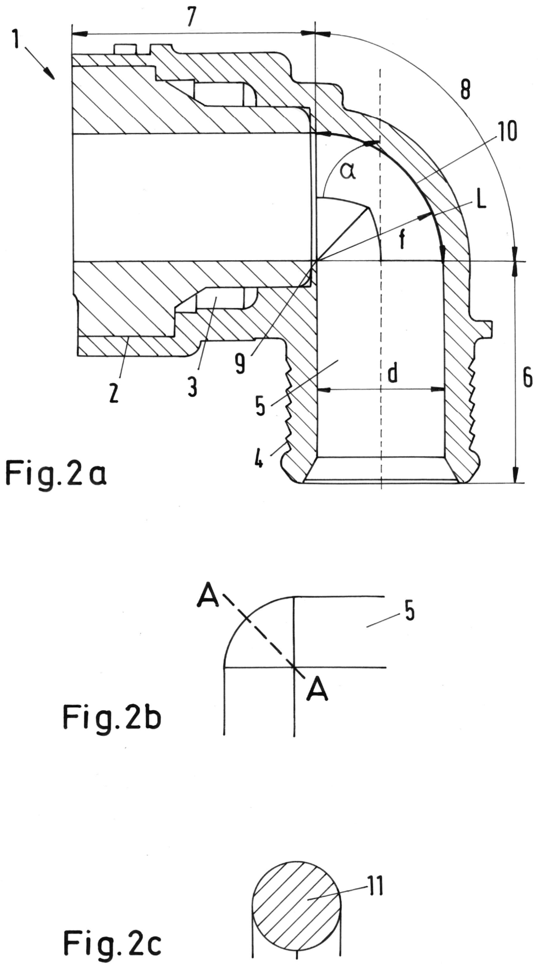

Fig. 2a zeigt eine Schnittansicht eines nun errfindungsgemäßen Leitungsverbinders 1 mit einem Gehäuse 2, das einen Aufnahmeraum 3 und einen Anschlussstutzen 4 ausbildet. Der Kanal 5 umfasst einen ersten geraden Kanalabschnitt 6 und einen gebogenen Kanalabschnitt 8. Ein zweiter gerader Kanalabschnitt 7 wird durch einen in dem Aufnahmeraum 3 des Leitungsverbinders 1 angeordneten Zapfen einer verbundenen Fluidleitung ausgebildet.

Der gebogene Kanalabschnitt 8 weist eine innere Kanallinie 9 und eine äußere Kanallinie 10 auf. Die äußere Kanallinie 10 ist weniger stark gekrümmt als die innere Kanallinie 9, die in der gezeigten Ausführungsform im Wesentlichen punktförmig ausgebildet ist und dem Knick zwischen den beiden geraden Kanalabschnitten 6, 7 entspricht. Die äußere Kanallinie 10 des gebogenen Kanalabschnitts 8 weist über eine gesamte Erstreckung des gebogenen Kanalabschnitts 8 parallel zur Strömungsrichtung eines potentiell durchströmenden Fluides eine Biegung auf. Dabei entspricht die Biegung, welcher die äußere Kanallinie 10 folgt, einem Abschnitt eines Kreisumfangs, der 0,9*α bis 1,1*α -fachen eines Durchmessers d des ersten und zweiten geraden Kanalabschnitts 6, 7 ist.

Fig. 2b zeigt einen Kanalabschnitt mit kreisförmigen Querschnitt, welcher Hinterschnitte aufweist und deshalb nicht entformt werden kann. Zur Verdeutlichung ist der Verlauf des Kanals 5 ohne umgebendes Gehäuse 2 gezeigt. Ein Schnitt durch die Linie A-A in Fig. 2b ist in Fig. 2c als Querschnitt 11 durch den gebogenen Kanalabschnitt 8 dargestellt. Dieser ist im Wesentlichen kreisförmig und weist vorzugsweise einen Durchmesser auf, der gleich dem Durchmesser des ersten und/oder zweiten geraden Kanalabschnittes ist.

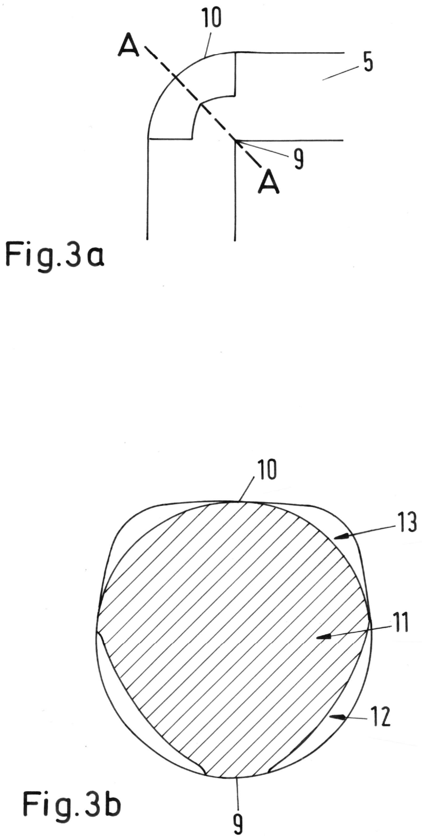

Fig. 3a zeigt eine weitere Ausführungsform eines Kanals 5 eines Leitungsverbinders 1, wobei der Leitungsverbinder in Schnittansicht im Wesentlichen der Ausführungsform in Fig. 2a entspricht. Zur Vermeidung von Hinterschneidungen bei der Herstellung eines Leitungsverbinders sind in dieser Ausführungsform zwei Abflachungen 12 und zwei Aufweitungen 13 vorgesehen. Wie im Querschnitt 11 des gebogenen Kanalabschnitts 11 in Fig. 3b erkennbar ist, sind die beiden Abflachungen 12 beidseitig zur inneren Kanallinie 9 und von dieser beabstandet angeordnet. Allerdings sind die Abflachungen 12 näher an der inneren Kanallinie 9 als zur äußeren Kanallinie 10 angeordnet. Die beiden Aufweitungen 13 sind hingegen beidseitig der äußeren Kanallinie 10 und von dieser beabstandet, aber näher an der äußeren Kanallinie 10 als zur inneren Kanallinie 9 angeordnet.

Insgesamt wird durch die Aufweitungen 13 eine zusätzliche Querschnittsfläche geschaffen, die insbesondere in der gleichen Größenordnung liegen kann, wie die Querschnittsfläche, die durch die Abflachungen 12 reduziert wurde.

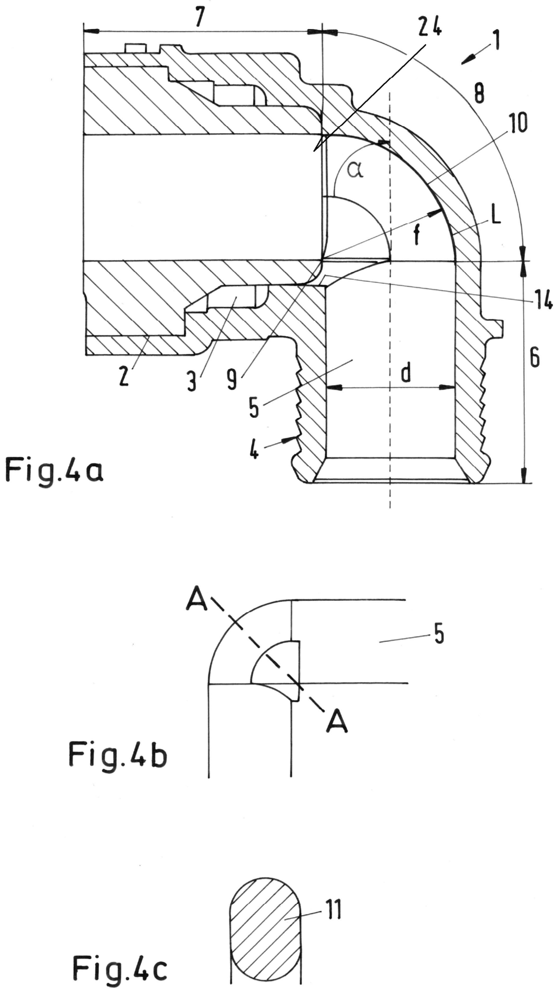

Fig. 4a zeigt ebenfalls eine Schnittansicht eines Leitungsverbinders 1, wobei dieser zusätzlich zu der Ausführungsform in Fig. 2a einen Ausschnitt 14 aufweist. Dieser Ausschnitt 14 ist in einer Wandung des ersten geraden Kanalabschnitts 6 in einem Bereich angeordnet, der an die innere Kanallinie 9 des gebogenen Kanalabschnitts 8 grenzt.

In Fig. 4b ist der Kanal 5 des Leitungsverbinders 1 aus Fig. 4a in Schnittansicht dargestellt. Bei Schnitt durch die Linie A-A wird der Querschnitt des gebogenen Abschnitts 11, wie in Fig. 4c gezeigt erhalten. Der Ausschnitt 14 weist somit eine Form auf, welche den Querschnitt 11 des gebogenen Kanalabschnitts 8 vergrößert.

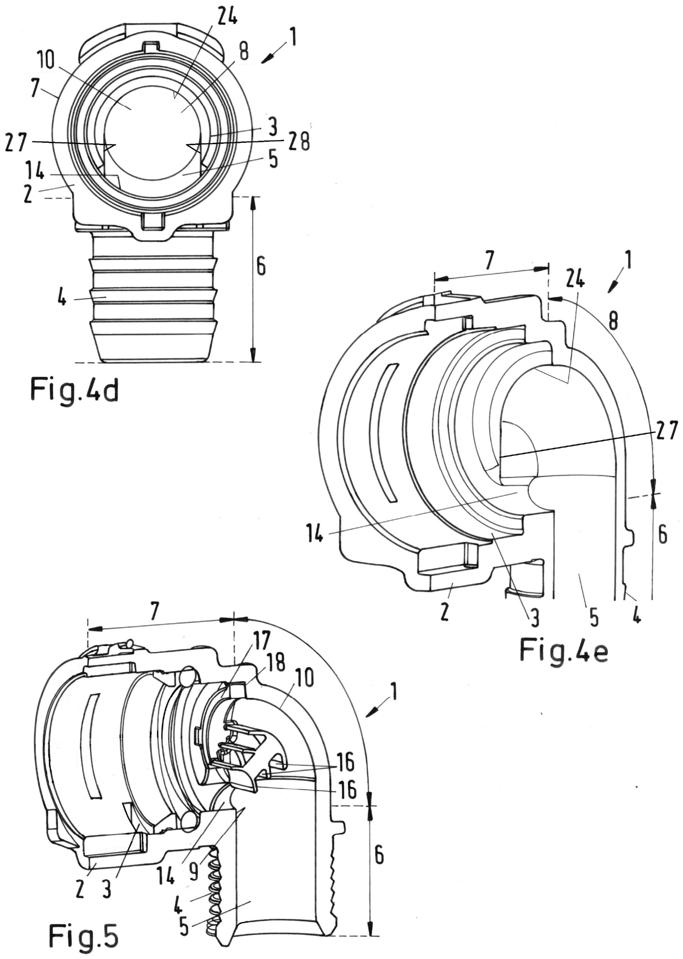

Der Ausschnitt 14 ist ebenfalls in den Figuren 4d und 4e dargestellt. In Figur 4d ist eine Ansicht des Leitungsverbinders 1 in den Aufnahmeraum 3 dargestellt. Der Ausschnitt 14 bildet dabei mit der Kante 24 des gebogenen Kanalabschnitts 8 eine Iglu-Form aus. Zwei Kantenabschnitte 27, 28 der Kante 24 erstrecken sich von der äußeren Kanallinie 10 bis zum Ausschnitt 14. Die beiden Kantenabschnitte 27, 28 bilden dabei die seitlichen Wände der Iglu-Form, wobei der Ausschnitt 14 einen Boden der Iglu-Form und der Bereich um die äußere Kanallinie 10 das Dach der Iglu-Form bilden.

Figur 4e zeigt eine dreidimensionale Schnittansicht des Leitungsverbinders 1. In dieser Ansicht ist die Form der Wand des gebogenen Kanalabschnitts 8 sichtbar. Am ersten geraden Kanalabschnitt 6 weist der Querschnitt des gebogenes Kanalabschnitts 8 in diesem Beispiel eine elliptische, vorzugsweise kreisförmige, Form auf. Am zweiten geraden Kanalabschnitt 7 kann der Querschnitt des gebogenes Kanalabschnitts 8 auf Grund des Ausschnitts 14 die Iglu-Form aufweisen.

Vorteilhaft ist es, wenn die Kante 24 und die Kantenabschnitte 27, 28 am Zugang des gebogenen Kanalabschnitts 8 den kleinstmöglichen Radius, z. B. zwischen 0 und 1 mm, vorzugsweise 0,1 mm aufweisen. Damit kann der Druckverlust im Leistungsverbinder weiter minimiert werden.

Fig. 5 zeigt eine weitere Ausführungsform des Leitungsverbinders 1. In dem gebogenen Kanalabschnitt 8 sind drei Führungselemente 16 positioniert, die parallel zueinander und beabstandet voneinander angeordnet sind. Die Führungselemente 16 sind an einem Träger 17 befestigt, der in einer Aufnahme 18 am gebogenen Kanalabschnitt 8 gelagert ist.

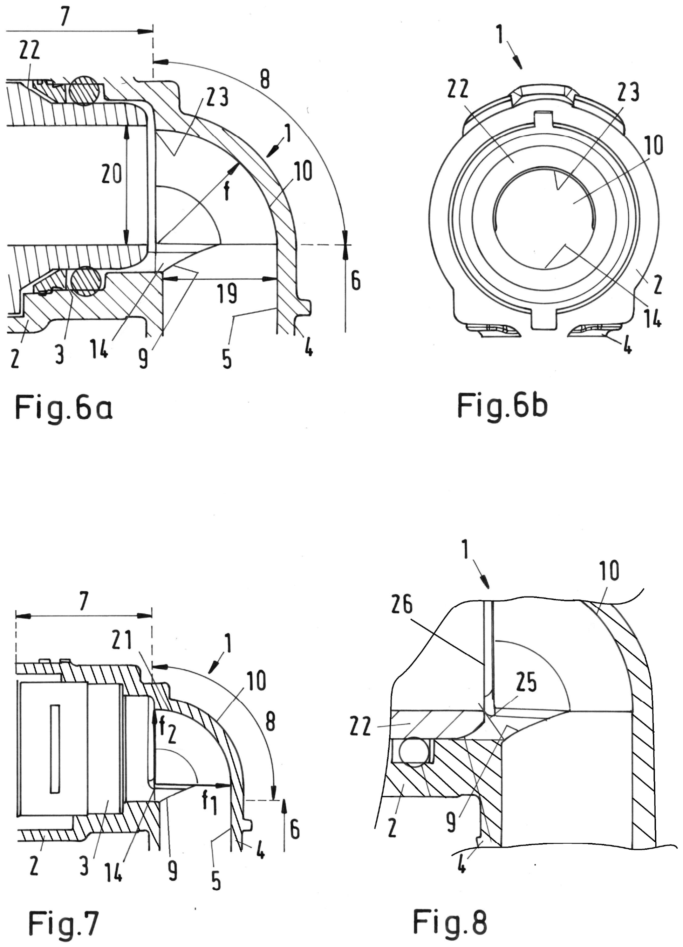

Fig. 6a und 6b zeigen eine weitere Ausführungsform des Leitungsverbinders 1 mit einem Ausschnitt 14.

In Figur 6a ist der erste Innendurchmesser 19 des ersten geraden Kanalabschnitts 6 dargestellt. Weiter ist der zweite Innendurchmesser 20 des zweiten geraden Kanalabschnitts 7 dargestellt. Zudem ist der Radius f der äußeren Kanallinie 10 dargestellt. Wenn der erste und zweite Innendurchmesser 19, 20 einen geringen Unterschied aufweisen, z. B. bei einem ersten Innendurchmesser 19 von 15 mm und einem zweiten Innendurchmesser 20 von 16 mm, kann für den Radius f der Wert des kleineren Innendurchmessers, in diesem Fall 15 mm gewählt werden.

Wie in Figur 6b dargestellt, ist beim Übergang zwischen einem Leitungsabschnitt 22 einer Leitung, das in den Aufnahmeraum 3 des zweiten geraden Kanalabschnitts 7 eingesteckt ist, und dem gebogenen Kanalabschnitt 8 dann eine Stufe 23 am zum zweiten geraden Kanalabschnitt 7 weisenden Ende der äußeren Kanallinie 10 angeordnet. An der Stufe 23 entsteht ein Druckverlust in dem durch den Kanal 5 strömenden Fluid. In diesem Fall ist die Stufe 23 vergleichsweise flach ausgebildet, so dass der Druckverlust minimal ist.

Wenn der erste Innendurchmesser 19 und der zweite Innendurchmesser 20 einen großen Unterschied aufweisen, z. B. wenn der erste Innendurchmesser 19 einen Wert von 12 mm aufweist und der zweite Innendurchmesser 20 einen Wert von 16 mm, dann kann in diesem Fall der Wert 16 mm für den Radius f gewählt werden.

Figur 7 zeigt eine weitere Ausführungsform des Radius f. Für den Fall, dass die Kanalabschnitte 6 und 7 unterschiedliche Innendurchmesser 19, 20 aufweisen, kann die Krümmung der äußeren Kanallinie 10 im gebogenen Kanalabschnitt 8 in den unmittelbar an die geraden Kanalabschnitte 6, 7 angrenzenden Bereiche einem Radius entsprechen, der dem Innendurchmesser 19, 20 des jeweils angrenzenden Kanalabschnittes 6, 7 entspricht.

Die Krümmung des äußeren Kanallinie 10 zwischen den unmittelbar an die geraden Kanalabschnitte 6, 7 angrenzenden Bereiche verändert sich in diesem Beispiel entlang der äußeren Kanallinie 10. Über die gesamte äußere Kanallinie 10 erfolgt die Änderung der Krümmung vorzugsweise gleichmäßig verteilt, d. h. die erste Ableitung der Krümmung entlang der äußeren Kanallinie 10 ist konstant. Damit wird ein gleichmäßiger Übergang zwischen den Innendurchmessern 19, 20 des ersten geraden Kanalabschnitts 6 und des zweiten geraden Kanalabschnitts 7 ausgebildet. Die äußere Kanallinie 10 kann z. B. als Spline 21 ausgebildet sein, mit den Randbedingungen, dass der Spline 21 an dem ersten geraden Kanalabschnitt 6, einen Radius f entspricht, der dem ersten Innendurchmesser 19 entspricht, und an dem zweiten geraden Kanalabschnitt 7, einen Radius 23 entspricht, der dem zweiten Innendurchmesser 20 entspricht. Die Änderung des Radius 23 entlang der äußeren Kanallinie 10 entspricht daher in diesem Beispiel einem Übergang zwischen zwei verschiedenen Radien.

Diese Ausführungsform ist vorteilhaft, da stetige/sanfte/gleichmäßige Änderungen des Strömungsquerschnitts des Kanals 5 einen geringeren Druckverlust verursachen als abrupte Übergänge, wie wenn z. B. eine Stufe 23 in dem Kanal 5 angeordnet ist.

Figur 8 zeigt eine weitere Ausführungsform des Leitungsverbinders 1. Dabei ist ein Leitungsabschnitt 22 in dem Aufnahmeraum 3 angeordnet. An der inneren Kanallinie 9 ist der Leitungsabschnitt 22 von dem ersten geraden Kanalabschnitt 6 derart beabstandet, dass eine Verbindungslinie 25 zwischen der inneren Kanallinie 9 und einer Innenkante 26 des Leitungsabschnitts 22, an der der zweite gerade Kanalabschnitt 7 beginnt, einen Winkel von 30° bis 90°, vorzugsweise 40° bis 80°, weiter vorzugsweise 45° bis 60°, mit einer Erstreckungsrichtung des zweiten geraden Kanalabschnitts 7 einschließt. Dies bewirkt eine weitere Reduzierung des Druckverlustes im Leitungsverbinder 1.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Leitungsverbinder/Leitungsverbinderanordnung
- 2: Gehäuse
- 3: Aufnahmeraum
- 4: Anschlussstutzen
- 5: Kanal
- 6: erster gerader Kanalabschnitt
- 7: zweiter gerader Kanalabschnitt
- 8: gebogener Kanalabschnitt
- 9: innere Kanallinie
- 10: äußere Kanallinie
- 11: Querschnitt des gebogenen Kanalabschnitts 8
- 12: Abflachungen
- 13: Aufweitungen
- 14: Ausschnitt
- 16: Führungselement
- 17: Träger
- 18: Aufnahme
- 19: erster Innendurchmesser
- 20: zweiter Innendurchmesser
- 21: Spline
- 22: Leitungsabschnitt
- 23: Stufe
- 24: Kante
- 25: Verbindungslinie
- 26: Innenkante
- 27: Kantenabschnitt
- 28: Kantenabschnitt
- d: Durchmesser
- α: Umlenkwinkel
- L: Länge
- f: Radius

## Patentansprüche

1. Leitungsverbinder zum fluidkommunizierenden Verbinden von Fluidleitungen, umfassend ein Gehäuse (2) mit einem Aufnahmeraum (3), einem Anschlussstutzen (4) und einen fluiddurchströmbaren Kanal (5), wobei der fluiddurchströmbare Kanal (5) einen ersten geraden Kanalabschnitt (6) und einen zweiten geraden Kanalabschnitt (7), mit einem dazwischen ausgebildeten Umlenkwinkel α sowie einen gebogenen Kanalabschnitt (8) aufweist, wobei α hierbei in Bogenmaß angegeben wird, wobei der gebogene Kanalabschnitt (8) zwischen dem ersten und zweiten geraden Kanalabschnitt (6, 7) angeordnet ist und diese miteinander fluiddurchströmbar verbindet, wobei der gebogene Kanalabschnitt (8) eine innere Kanallinie (9) und eine äußere Kanallinie (10) aufweist, wobei die äußere Kanallinie (10) weniger stark gekrümmt ist als die innere Kanallinie (9), wobei die äußere Kanallinie (10) des gebogenen Kanalabschnitts (8) über eine gesamte Erstreckung des gebogenen Kanalabschnitts (8) eine Länge L aufweist, wobei der fluiddurchströmbare Kanal (5) einen Durchmesser d aufweist und es gilt: 0,9*α*d ≤ L ≤ 1,1*α*d, oder wobei einer der beiden geraden Kanalabschnitte (6, 7) einen kleineren Durchmesser D1 und der andere der beiden geraden Kanalabschnitte (6, 7) einen größeren Durchmesser D2 aufweist und es gilt: 0,9*α*D1 ≤ L ≤ 1,1*α*D2, **dadurch gekennzeichnet, dass** der gebogene Kanalabschnitt (8) zumindest eine Aufweitung (13) aufweist.

2. Leitungsverbinder nach Anspruch 1, **dadurch gekennzeichnet, dass** der zweite gerade Kanalabschnitt (7) durch einen im Aufnahmeraum (3) aufgenommenen Leitungsabschnitt einer Fluidleitung ausgebildet ist.

3. Leitungsverbinder nach einem der vorhergehenden Ansprüche, **dadurch gekennzeichnet, dass** eine Verbindungslinie (25) zwischen der inneren Kanallinie (9) und einer Innenkante (26) eines in den Aufnahmeraum (3) eingeführten Leitungsabschnitts (22), an der der zweite gerade Kanalabschnitt (7) beginnt, einen Winkel von 30° bis 90°, vorzugsweise 40° bis 80°, weiter vorzugsweise 45° bis 60°, mit einer Erstreckungsrichtung des zweiten geraden Kanalabschnitts (7) einschließt.

4. Leitungsverbinder nach einem der vorhergehenden Ansprüche, **dadurch gekennzeichnet, dass** die äußere Kanallinie (10) des gebogenen Kanalabschnitts (8) einem Kreisumfangsabschnitt entspricht, der insbesondere ½ π multipliziert mit dem Durchmesser (d) des ersten geraden Kanalabschnitts (6) ist.

5. Leitungsverbinder nach einem der vorhergehenden Ansprüche, **dadurch gekennzeichnet, dass** der gebogene Kanalabschnitt (8) zwei Aufweitungen (13) aufweist, die insbesondere in Umfangsrichtung des gebogenen Kanalabschnitts (8) beidseitig und/oder beabstandet von der äußeren Kanallinie (10) angeordnet sind.

6. Leitungsverbinder nach einem der vorhergehenden Ansprüche, **dadurch gekennzeichnet, dass** innerhalb des gebogenen Kanalabschnitts (8) zumindest ein Führungselement (16) angeordnet ist, welches die Strömungsrichtung zumindest eines Teils eines durchströmenden Fluides verändert.

7. Leitungsverbinder nach einem der vorhergehenden Ansprüche, **dadurch gekennzeichnet, dass** innerhalb des gebogenen Kanalabschnitts (8) drei Führungselemente parallel zueinander und beabstandet voneinander angeordnet sind.
